# EUROPEAN PATENT SPECIFICATION

(11) **EP 1 483 903 B1**
(45) Date of publication and mention of the grant of the patent: **26.09.2012**
(21) Application number: 03743996.5
(22) Date of filing: 05.03.2003
(51) Int. Cl.: H04N 5/235, H04N 5/57

(54) **IMAGING APPARATUS INCLUDING AUTOMATIC BRIGHTNESS ADJUSTMENT FUNCTION AND IMAGING METHOD**
ABBILDUNGSVORRICHTUNG MIT AUTOMATISCHER HELLIGKEITSEINSTELLFUNKTION UND ABBILDUNGSVERFAHREN
IMAGEUR EQUIPE D'UNE FONCTION DE REGLAGE AUTOMATIQUE DE LA LUMINOSITE ET PROCEDE D'IMAGERIE ASSOCIE

(30) Priority: 12.03.2002 JP 2002066602; 23.01.2003 JP 2003014298
(43) Date of publication of application: 08.12.2004
(73) Proprietor: CASIO COMPUTER CO., LTD., Shibuya-ku, Tokyo 151-8543 (JP)
(72) Inventor: SHINOZAKI, Yoshihiko, Tachikawa-shi, Tokyo 190-0031 (JP)
(74) Representative: Grünecker, Kinkeldey, Stockmair & Schwanhäusser
(86) International application number: PCT/JP2003/002594
(87) International publication number: WO 2003/077536

(56) References cited:
- EP-A- 0 801 496
- US-A- 4 754 332
- US-A- 4 825 293
- US-A- 5 353 058
- US-A- 6 160 960
- US-A1- 2001 010 556
- US-A1- 2001 048 474
- US-B1- 6 473 116
- DATABASE WPI Section EI, Week 200331 Derwent Publications Ltd., London, GB; Class S02, AN 2003-324012 XP002245244 & JP 2003 090778 A (ASAHI OPTICAL CO LTD), 28 March 2003 (2003-03-28)
- DATABASE WPI Section EI, Week 200049 Derwent Publications Ltd., London, GB; Class W04, AN 2000-537928 XP002245245 & JP 2000 209495 A (OLYMPUS OPTICAL CO LTD), 28 July 2000 (2000-07-28)

## Description

### Technical Field

The present invention relates to an imaging apparatus for use in a camera apparatus such as a digital camera including an automatic brightness adjustment function, and to an imaging method.

### Background Art

Conventionally, in an imaging apparatus such as a digital camera, there has been widespread adoption of an automatic brightness adjustment function, namely, a function which repeats processing to "calculate a brightness average value of image signals output from an imaging element such as a CCD and increase/decrease aperture, brightness adjustment quantity, gain and the like in the next CCD exposure at a fixed rate based on this brightness average value" in accordance with each CCD exposure timing in order to continuously display a finder image (through image) with appropriate brightness on a monitor.

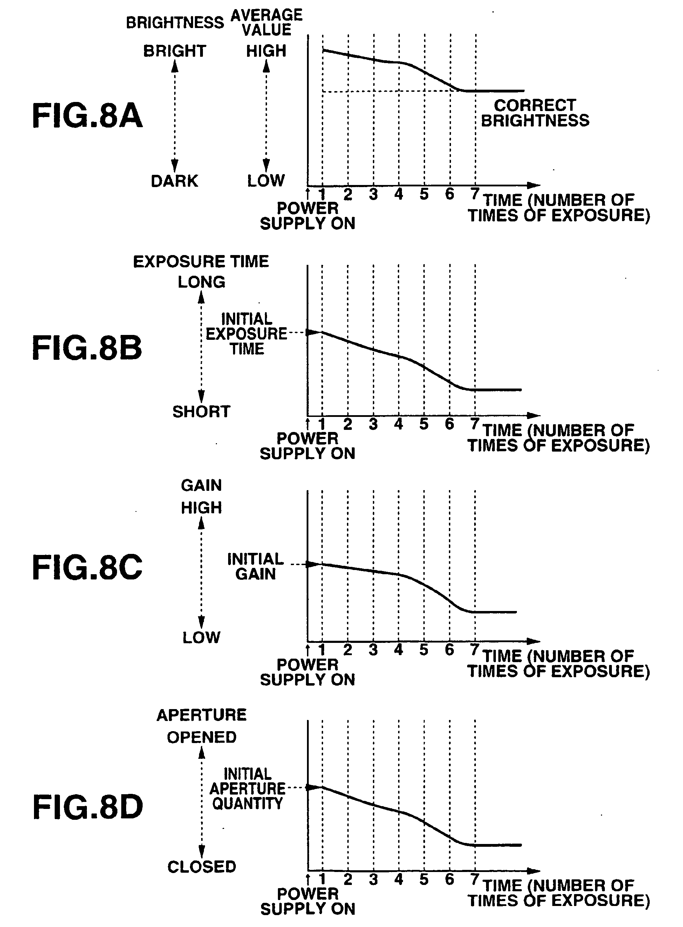

FIG. 8A is a view showing a time transient state of the brightness average value calculated based on image signals output from the CCD after turning on a power supply; FIG. 8B, a view showing a time transient state of the brightness adjustment quantity of the CCD after turning on the power supply; FIG. 8C, a view showing a time transient state of the amplification factor set in an AGC amplifier used to adjust the level of the image signal output from the CCD after turning on the power supply; and FIG. 8D, a view showing a time transient state of the aperture size set in an aperture device arranged on a front surface of the CCD after turning on the power supply. The brightness average value becomes high when an object is bright and low when an object is dark as shown in the drawing, and is calculated based on the image signals output from the AGC amplifier. FIGS. 8A to 8D show an example when the brightness of a circumference (object) hardly varies, and FIGS. 8B to 8D show an example when the brightness adjustment quantity, the aperture size and a gain are evenly adjusted in a well-balanced manner in the case of adjusting the brightness of the image signal.

As shown in FIG. 8A, if the brightness average values of the image signals which are obtained by the CCD through the aperture device immediately after turning on the power supply and amplified by the AGC gain amplifier is higher than an adequate value, the brightness adjustment quantity is gradually reduced, the opening area of the aperture device is gradually narrowed and the gain is gradually lowered while the determination that the brightness average value is high is repeated as shown in FIGS. 8B to 8D, thereby obtaining an image signal with adequate brightness. Conversely, if the brightness average value of the image signals which are obtained by the CCD through the aperture device immediately after turning on the power supply and amplified by the AGC amplifier is lower than an adequate value, the brightness adjustment quantity is gradually increased, the opening area of the aperture device is gradually widened and the gain is gradually increased while the determination that the brightness average value is low is repeated, thereby obtaining an image signal with an adequate brightness.

However, since predetermined fixed values (previously set values) are set as an initial exposure time, the initial aperture size and the initial gain irrespective of the fact that whether the circumference is bright or dark at the initial power-on of the imaging apparatus according to the prior art is unknown, an image signal with a brightness far from the brightness may be obtained immediately after the initial power-on depending on the brightness of the circumference in some cases and, in such cases, the time required for the image signal to acquire the appropriate brightness becomes long.

### Disclosure of Invention

The present invention is directed to apparatus and method that substantially obviates the above problem due to limitations and disadvantages of the related art as defined by the appended claims.

According to an aspect of the present invention, an imaging apparatus comprises the features of claim 1.

### Brief Description of Drawings

The accompanying drawings, which are incorporated in and constitute a part of the specification, illustrate presently embodiments of the present invention and, together with the general description given above and the detailed description of the embodiments given below, serve to explain the principles of the present invention in which:
FIG. 1 is a block diagram showing a circuit configuration of an embodiment of an imaging apparatus according to the present invention;
FIGS. 2A and 2B are flowcharts showing an embodiment of a manual setting operation for an initial brightness adjustment quantity and a brightness adjustment operation;
FIG. 3 is a view showing an embodiment of an initial brightness adjustment quantity setting screen;
FIGS. 4A, 4B, 4C, and 4D are views showing a time transient state of a brightness average value of output signals from the imaging device and the brightness adjustment quantity relative to an imaging device after turning on a power supply in a brightness adjustment method according to the present invention;
FIG. 5 is a block diagram showing a circuit configuration of another embodiment of the imaging apparatus according to the present invention;
FIGS. 6A and 6B are flowcharts showing an embodiment of an automatic setting operation for an initial brightness adjustment quantity;
FIGS. 7A, 7B, 7C, and 7D are flowcharts showing another embodiment of an automatic setting operation for an initial brightness adjustment quantity; and
FIGS. 8A, 8B, 8C, and 8D are views showing a time transient state of a brightness average value of output signals from the imaging device and the brightness adjustment quantity relative to the imaging device after turning on the power supply in the prior art brightness adjustment method.

### Best Mode for Carrying Out the Invention

### First Embodiment

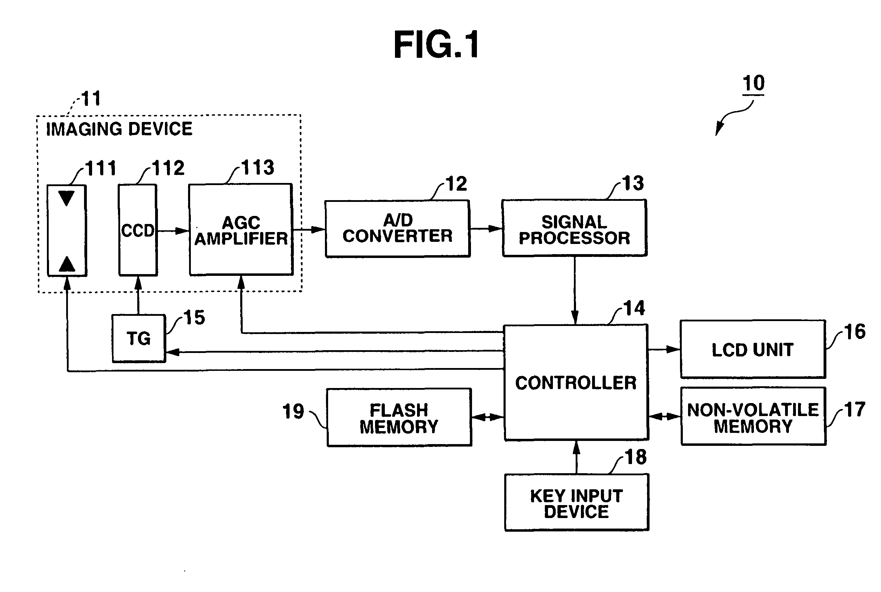

FIG. 1 is a block diagram showing a circuit configuration of an embodiment of an imaging apparatus according to the present invention, and a digital camera is described as an example of the imaging apparatus. However, the embodiment of the imaging apparatus is not limited to the digital camera.

A digital camera 10 comprises an imaging device 11, an A/D converter 12, a signal processor 13, a controller 14, a TG (timing gate) 15, an LCD unit (display unit) 16, a non-volatile memory 17, a key input device 18, and a flash memory 19.

The imaging device 11 comprises an aperture device 111, a CCD (imaging element) 112, and an AGC amplifier 113.

The aperture device 111 adjusts a quantity of incoming light emitted onto the CCD 112.

The CCD 112 obtains an object optical image entered through the aperture device 111, converts it into an image signal, and outputs a resulting signal to the AGC amplifier 113.

The AGC amplifier 113 amplifies the image signal output from the CCD 112, and outputs it to the A/D converter 12.

The A/D converter 12 converts the image signal output from the AGC amplifier 113 into a digital signal, and outputs it to the signal processor 13.

The signal processor 13 performs image processing such as pixel interpolation processing, white balance processing, brightness/color-difference signal conversion processing or the like with regard to the image signal output from the A/D converter 12, and outputs a result to the controller 14.

The controller 14 includes periphery circuits such as a processor, a program storing memory, a RAM and others (not shown). In the controller 14, the processor controls the operation of the entire digital camera 10, and, in a timely manner, reads various kinds of programs (including an initial brightness adjustment quantity setting program and a brightness adjustment program) stored in the program storing memory based a selection operation by a main control program or a user, thereby executing various functions of the digital camera 10. For example, it executes the initial brightness adjustment quantity setting function in accordance with the initial brightness adjustment quantity setting program when turning on a main power supply of the digital camera 10, or it executes the brightness adjustment function in accordance with the brightness adjustment program when turning on the main power supply.

The TG 15 controls an exposure timing or the brightness adjustment quantity of the CCD 12 based on a control signal output from the controller 14.

The LCD unit 16 displays a through image (finder image) in the imaging standby mode, and displays a reproduced image in the image reproduction mode. For complementing the operation, it is possible to perform processing menu display when selecting a function, display of figures or icons for setting.

The non-volatile memory 17 stores an initial brightness adjustment quantity (adjustment value) which will be described later as well as information which must be stored even after the power supply is turned off.

The key input device 18 includes function selection keys to select various functions or screens (for example, mode keys), cursor keys comprising four keys, i.e., an up key, a down key, a left key, and a right key, a shutter key, a set key, and others, and a power supply on/off key (main power supply key), and a signal corresponding to the operation state is supplied to the processor in the controller 14 when these keys are pressed.

The flash memory 19 stores image data obtained by the imaging device 11 in response to the operation of the shutter key by a user. This flash memory 11 may be attachable to/detachable from the digital camera 10, and the initial brightness adjustment quantity may be stored in the flash memory 19 in place of the non-volatile memory 17.

Manual Setting of Initial Brightness Adjustment Quantity

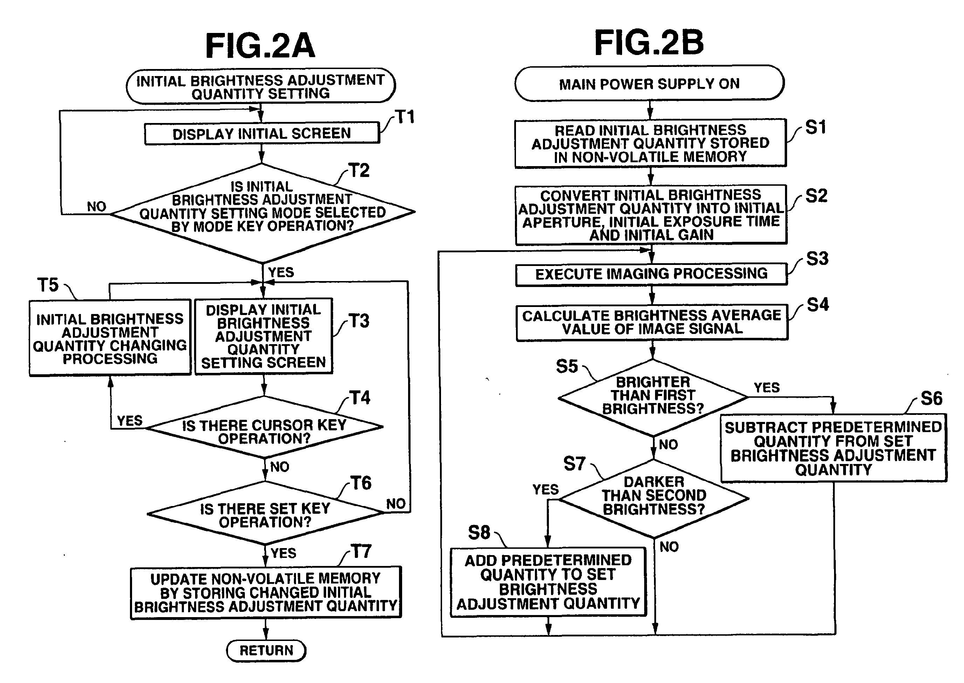

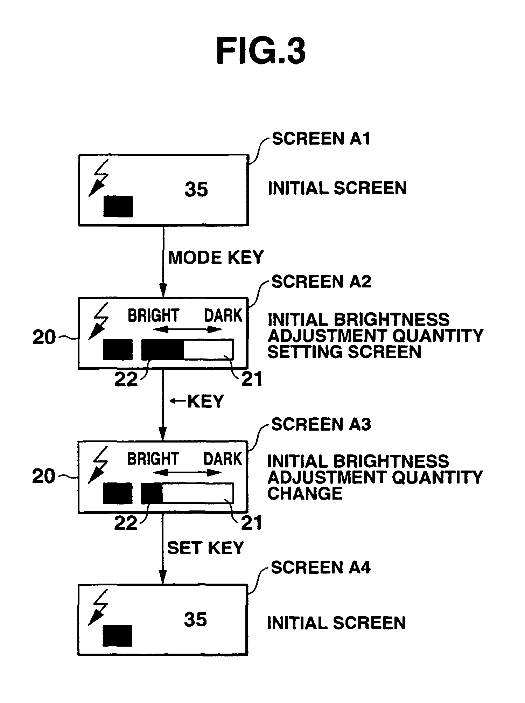

FIG. 2A is a flowchart showing an operation example when setting the initial brightness adjustment quantity, FIG. 2B is a flowchart showing an example of the brightness adjustment operation when the main power supply is turned on, and FIG. 3 is a view showing an embodiment of an initial brightness adjustment quantity setting screen displayed in a part on a liquid crystal display of the LCD unit 16.

In FIGS. 2A and 2B, the processor in the controller 14 controls the operation of the respective parts in the digital camera 10 in accordance with an initial brightness adjustment quantity setting procedure defined by the initial brightness adjustment quantity setting program and a brightness adjustment procedure at the time of main power-on defined by the brightness adjustment program.

In FIG. 2A, when a user turns on the main power supply key in the key input device 18, a status signal is supplied to the processor in the controller 14 (which will be simply referred to as the processor hereinafter), and the processor displays image signals sequentially output from the imaging device 11 on the liquid crystal display in the LCD unit 16 as through images and, at the same time, also displays an initial screen such as shown as a screen A1 in FIG. 3 in a part of the liquid crystal display (step T1).

In this state, when the user operates the mode key and the initial brightness adjustment quantity setting mode is selected, the status signal is supplied to the processor (YES at step T2), and the processor displays the initial brightness adjustment quantity setting screen 20 such as shown as a screen A2 in FIG. 3 in place of the initial screen in the liquid crystal display (step T3). The initial brightness adjustment quantity setting screen 20 displayed here is created based on the initial brightness adjustment quantity currently stored in the non-volatile memory 17. The initial brightness adjustment quantity currently stored in the non-volatile memory 17 is read and stored in the RAM in the controller 14.

Subsequently, the processor checks the status signal from the key input device 18, and advances to step T5 when the user presses the left key or the right key in the cursor keys, or advances to step T6 otherwise (step T4).

That is, the user operates the left key in the cursor keys when he/she visually judges the brightness of the object (circumference) and determines that it is bright, and the user operates the right key in the cursor keys when he/she determines that it is dark, thereby supplying the status signal to the processor.

When the operation of the left key is detected at step T4, as shown by the screen A3 in FIG. 3, a dark part 22 in an initial brightness adjustment quantity setting window 21 of the initial brightness adjustment quantity setting screen 20 is reduced and, at the same time, the initial brightness adjustment quantity stored in the RAM is changed, and the control returns to step T3 in order to display the dark part 22 having an area corresponding to the changed initial brightness adjustment quantity in the initial brightness adjustment quantity setting window 21 (step T5). When the operation of the right key is detected at step T4, the dark part 22 in the initial brightness adjustment quantity setting window 21 of the initial brightness adjustment quantity setting screen 20 is enlarged and, at the same time, the initial brightness adjustment quantity stored in the RAM is changed, and the control returns to step T3.

The processing of steps T3 to T5 is repeated until the initial brightness adjustment quantity desired by the user can be obtained.

The processor checks the status signal from the key input device 18 when the user does not operate the left key or the right key at step T4, the control advances to step T7 when the set key is operated, and control returns to step T3 in other cases. That is, the initial brightness adjustment quantity changing processing at step T5 is repeated in response to the operation of the left key or the right key by the user until the user operates the set key (step T6).

When the set key is operated, the processor updates and stores the initial brightness adjustment quantity changed by the initial brightness adjustment quantity changing processing at step T5 and stored in the RAM as a set value in the non-volatile memory 17, and also returns to step T1 in order to restore the initial screen as shown by the screen A4 in FIG. 3 (step T7).

In this manner, by manually setting an arbitrary initial brightness adjustment quantity (the initial brightness adjustment quantity setting screen display processing at step T3, the set value changing processing at steps T4 and T5, and the set value updating and storing processing at step T7), the manually set initial brightness adjustment quantity can be used at the time of next power-on.

The above-described initial brightness adjustment quantity is a value which can uniquely determine the initial aperture size, the initial exposure time and the initial gain based on the adjustment quantity, and the non-volatile memory 17 stores therein a correspondence table of the initial brightness adjustment quantity, the initial aperture size, the initial exposure time and the initial gain in advance.

For example, in the flowchart of FIG. 2A, when the left key is operated, the initial brightness adjustment quantity such that the initial exposure time is shortened, the initial aperture size is increased, and the initial gain is reduced in accordance with the quantity of operation (number of times of operation) is updated and stored in the non-volatile memory 17. When the right key is operated, the initial brightness adjustment quantity such that the initial exposure time is increased, the initial aperture size is reduced, and the initial gain is increased in accordance with the quantity of operation is updated and stored in the non-volatile memory 17.

In the flowchart of FIG. 2A, the initial brightness adjustment quantity to decrease the initial brightness of the image signal is set when the user inputs information indicating that the object (circumference) is bright, and the initial brightness adjustment quantity to increase the initial brightness of the image signal is set when the user inputs information indicating that the object (circumference) is dark. However, the initial brightness adjustment quantity to increase the initial brightness of the image signal may be set by directly inputting information indicating that an increase in the initial brightness of the image signal is desired when the user determines that the object (circumference) is dark, and the initial brightness adjustment quantity to decrease the initial brightness of the image signal may be set by directly inputting information indicating that a decrease in the initial brightness of the image signal is desired when the user determined that the object (circumference) is bright, instead of changing and setting the initial brightness adjustment quantity by inputting lighting information of the object (circumference) from the user as it is.

In the flowchart of FIG. 2A, an arbitrary initial brightness adjustment quantity is manually input and set, and the input and set arbitrary initial brightness adjustment quantity is stored in the non-volatile memory 17. However, the arbitrary initial brightness adjustment quantity may be manually input and set, and the initial aperture size, the initial exposure time, and the initial gain uniquely determined by the input and set arbitrary initial brightness adjustment quantity and the correspondence table may be stored in the non-volatile memory 17.

In the flowchart of FIG. 2A, an arbitrary initial brightness adjustment quantity is manually input and set, and the input and set arbitrary initial brightness adjustment quantity is stored in the non-volatile memory 17. However, an arbitrary initial aperture size, an arbitrary initial exposure time, and an arbitrary initial gain may be enabled to be individually manually input and set, and the individually input and set arbitrary initial aperture size, arbitrary initial exposure time and arbitrary initial gain may be stored in the non-volatile memory 17.

In the flowchart of FIG. 2A, an arbitrary initial brightness adjustment quantity used to determine three values, i.e., the initial aperture size, an initial exposure time, and the initial gain is manually input and set, and it is stored in the non-volatile memory 17. However, only one or two of the three values may be manually input and set, and the input and set values may be stored in the non-volatile memory 17. Alternatively, any one of the three values may be set determined as a fixed value, and an arbitrary initial brightness adjustment quantity used to determine remaining two values may be manually set and stored in the non-volatile memory 17.

For example, when the aperture device 111 is not provided (the aperture size of the aperture device 111 is fixed), an arbitrary initial brightness adjustment quantity used to determine two values, i.e., the initial exposure time and the initial gain, or an arbitrary initial exposure time and an arbitrary initial gain are manually input and set. When the exposure time of the CCD 112 is fixed, an arbitrary brightness adjustment quantity used to determine two values, i.e., the initial aperture size and the initial gain, or an arbitrary aperture size and the initial gain are manually input and set. When the gain of the AGC amplifier 113 is fixed, an arbitrary initial brightness adjustment quantity used to determine two values, i.e., the initial aperture size and an initial exposure time, or an arbitrary initial aperture size and an arbitrary initial exposure time are manually input and set.

When the aperture size of the aperture device 111 and the exposure time of the CCD 112 are fixed, an arbitrary initial gain is manually input and set. When the exposure time of the CCD 112 and the gain of the AGC amplifier 113 are fixed, an arbitrary initial aperture size is manually input and set. When the aperture size of the aperture device 111 and the gain of the AGC amplifier 113 are fixed, an arbitrary initial exposure time is manually input and set.

Although the initial brightness adjustment quantity setting screen 20 displays the brightness adjustment quantity only in the bright and dark parts in the brightness adjustment quantity setting window 21, the present invention is not limited thereto. For example, an area ratio of the bright and dark parts or the brightness adjustment quantity may be digitized and displayed in the lower part of the brightness adjustment quantity setting window 21. The brightness adjustment quantity setting window 21 is not limited to a rectangular (oblong) shape. For example, it may have a circular shape or a square shape. The brightness adjustment quantity setting window 21 may be of a vertical type (histogram). Only the brightness adjustment quantity may be digitalized and displayed without providing the brightness adjustment quantity setting window 21, and the numeric value may be increased/decreased by the key operation.

### Brightness Adjustment When Turning Power on

In the flowchart of FIG. 2B showing the example of the brightness adjustment operation at the time of turning on the main power supply, when the user operates the power supply on/off key of the digital cameral 10 and the main power supply is turned on, the image pickup mode is set, and the processor reads the initial brightness adjustment quantity stored in the non-volatile memory 17 (step S1), stores the read initial brightness adjustment quantity in the RAM, converts the initial brightness adjustment quantity into the initial aperture size, the initial exposure time, and the initial gain by referring to the correspondence table stored in the non-volatile memory 17, then sets the aperture size of the aperture device 111 to the initial aperture size, supplies the initial exposure time to the TG 15, and sets the gain of the AGC amplifier as the initial gain (step S2).

When the control shifts from step S2 to step S3, in step S3, the processor executes the first imaging processing based on the initial aperture size, the initial exposure time, and the initial gain (initial brightness adjustment quantity) set at step S2. When the control shift from later-described step S6 or S8 to step S3, the processor executes the second or subsequent imaging processing based on the aperture size, the exposure time, and the gain corresponding to the brightness adjustment quantity changed and set by the processing at the later-described step S6 or S8.

Subsequently, the processor calculates a brightness average value of the image signal obtained by the imaging processing at step S3 (step S4). An integrator may be additionally provided, and this integrator may be caused to calculate a brightness average value of the image signal.

Then, the processor compares the acquired brightness average value with a predetermined first brightness value, and determines whether the brightness average value is brighter (higher) than the first brightness value (step S5).

When it is determined at step S5 that the brightness average value is brighter than the first brightness value, the processor subtracts a predetermined quantity from the brightness adjustment quantity currently stored in the RAM and returns to step S3 (step S6). When a predetermined quantity is subtracted from the brightness adjustment quantity, the aperture size is increased by a predetermined quantity (opening area of the aperture is narrowed), the brightness adjustment quantity is reduced for a predetermined time, and the gain is decreased by a predetermined quantity.

When it is determined at step S5 that the brightness average value is not brighter than the first brightness value, the control advances to step S7, and the processor compares the brightness average value with a second brightness value which is slightly lower (darker) than the first brightness value and determines whether the brightness average value is darker (lower) than the second brightness value.

When it is determined that the brightness average value is darker than the second brightness value, the processor adds a predetermined quantity to the brightness adjustment quantity currently stored in the RAM, and returns to step S3 (step S8). It is assumed that adding a predetermined quantity to the brightness adjustment quantity reduces the aperture size by a predetermined quantity (increase the opening area of the aperture), increases the brightness adjustment quantity for a predetermined time and increases the gain by a predetermined quantity.

When it is determined at step S7 that the brightness average value is not darker than the second brightness value, the brightness average value is a value between the first brightness value and the second brightness value, and the control returns to step S3 without increasing/decreasing the brightness adjustment quantity stored in the RAM since the brightness average value falls within a range of an appropriate brightness value.

By the above-described processing, the through image with an appropriate brightness is displayed on the liquid crystal display of the LCD unit 16, and image data with an appropriate brightness is recorded in the flash memory 19 by the operation of the shutter key.

As described above, the initial brightness adjustment quantity (the initial aperture size, the initial exposure time, and the initial gain) can be set in accordance with an intention of the user by the initial brightness adjustment quantity setting operation shown in FIG. 2A, and it is possible to approximate the brightness by controlling the aperture size, the exposure time, and the gain based on the set initial brightness adjustment quantity at steps S3 to S8. Therefore, as compared with the case where the initial brightness adjustment quantity is a fixed value in the prior art, the frequency of obtaining the image with an inappropriate brightness immediately after turning on the power supply is reduced. Thus, the time required to converge on the brightness after turning on the power supply is shortened, thereby eliminating accidental errors in releasing the shutter at the right moment or imaging an image with an inappropriate brightness.

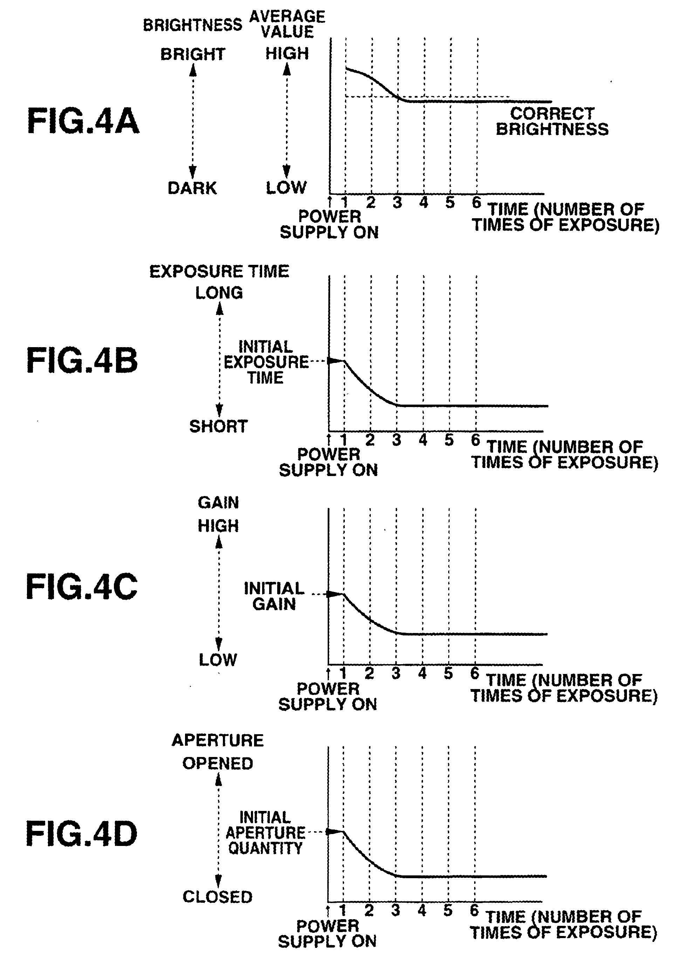

FIGS. 4A to 4D are views showing a time transient state of the brightness average value of the output signal from the imaging device 11, the aperture size of the aperture device 111, the exposure time of the CCD 112, and the gain of the AGC gain 113 after turning on the power supply in the brightness adjustment method according to the present invention shown in the flowchart of FIG. 2B. As apparent from the drawings, the time required to converge on the brightness after turning on the power supply is greatly shortened compared with the prior art shown in FIGS. 8A to 8D.

When the initial brightness adjustment quantity is stored in the non-volatile memory 17 in the form of the initial aperture size, the initial exposure time, and the initial gain, the processor reads the initial aperture size, the initial exposure time, and the initial gain stored in the non-volatile memory 17, stores the read initial aperture, initial exposure time, and initial gain in the RAM, sets the aperture size of the exposure device 111 as the initial aperture, supplies the initial exposure time to the TG 15, and sets the gain of the AGC amplifier 113 as the initial gain.

The present invention can be likewise applied when only one or two of the initial aperture size, the initial exposure time, and the initial gain are stored in the non-volatile memory 17, or when the initial brightness adjustment quantity which uniquely determines only two values of the initial aperture size, the initial exposure time, and the initial gain is stored in the non-volatile memory 17. However, this case adjusts the brightness of the image signal by changing and controlling only one or two values of the initial aperture size, the initial exposure time, and the initial gain at the time of automatic brightness adjustment.

In the above-described embodiment, although the exposure time, the aperture size and the gain are evenly adjusted in a well-balanced manner based on the initial brightness adjustment quantity, the adjustment degrees of the exposure time, the aperture size, and the gain may be different from each other. For example, an adjustment quantity of the exposure time is increased while an adjustment quantity of the gain is reduced.

In the above embodiment, the exposure time, the aperture size, and the gain are all adjusted irrespective of the initial brightness adjustment quantity, but values to be adjusted in three values of the exposure time, the aperture size, and the gain may be changed over depending on a value of the initial brightness adjustment quantity. For example, only the exposure time is adjusted when the initial brightness adjustment quantity is small, and adjustment of the gain is started when the initial brightness adjustment quantity becomes large and adjustment of only the exposure time cannot work around.

In the above embodiment, the image pickup mode is selected and the processing of the flowchart shown in FIG. 2B is started when a user turns on the main power supply by operating the power supply on/off key of the digital camera 10, but the processing of the flowchart shown in FIG. 2B may be initiated when the image pickup mode is selected by operating the mode key by the user with the main power supply being on, or when start of moving image pickup (moving image recording) is directed by operating the shutter key by the user.

Although the initial brightness adjustment quantity is set by the manual operation (key operation) in the first embodiment, the present invention is not limited thereto, and an automatic setting unit may be provided in order to automatically set the initial brightness adjustment quantity. The automatic setting unit for the initial brightness adjustment quantity will be described hereinafter.

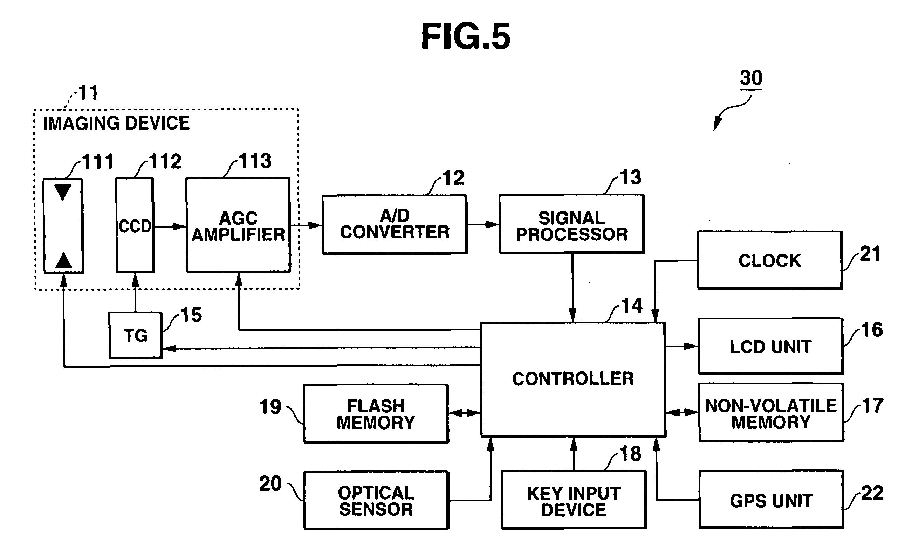

FIG. 5 is a block diagram showing a circuit configuration of an embodiment of an imaging apparatus according to the present invention, and a digital camera is taken as an example of the imaging apparatus.

In FIG. 5, the digital camera 30 includes an imaging device 11, an A/D converter 12, a signal processor 13, a controller 14, a TG 15, an LCD unit (display unit) 16, a non-volatile memory 17, a key input device 18, and a flash memory 19 which have the same structures and functions as those in the digital camera 10 shown in FIG. 1 (first embodiment), as well as a simplified low-power optical sensor 20. Further, as an image pickup environment information acquisition device required in a later-described third embodiment, a clock (calendar) portion 21 and a GPS unit 22 are included.

The optical sensor 20 is provided on the front side of the digital camera 30, senses a quantity of light around the camera, and supplies information corresponding to the brightness of the circumference to the processor in the controller 14. In this case, the processor holds this information in the RAM or the non-volatile memory 17. In the non-volatile memory 17 can be stored information based on the aperture size, the exposure time, and the gain immediately before turning off the main power supply, or information based on the brightness of the image signal obtained to the imaging device 11 immediately before turning off the main power supply.

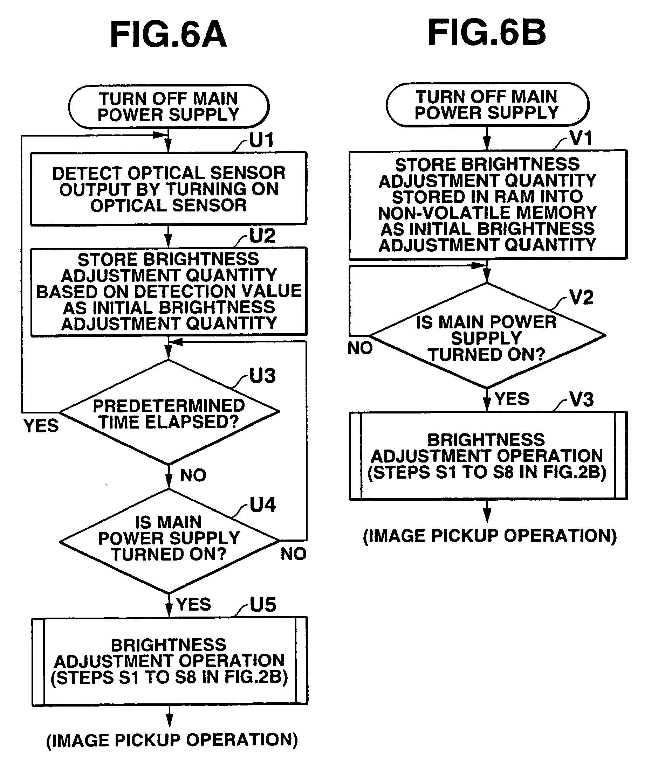

FIGS. 6A and 6B are flowcharts showing an embodiment of the initial brightness adjustment quantity setting operation by the automatic setting unit, FIG. 6A showing an example in which the initial brightness adjustment quantity is automatically set by using an output from the optical sensor 20 while the main power supply is off, and FIG. 6B showing an example in which the brightness adjustment quantity immediately before turning off the main power supply is automatically set as the initial brightness adjustment quantity.

Automatic Setting of Initial Brightness Adjustment Quantity Based on Output from Optical sensor

In FIG. 6A, when the main power supply is turned off by operating the power supply on/off key of the digital camera 10 by a user, the processor supplies a control signal to the optical sensor 20 in order to turn on the optical sensor 20, acquires a sensor output from the optical sensor 20 (brightness signal around the camera detected by the optical sensor 20) (step U1), calculates the brightness adjustment quantity according to a detection value, stores it in the RAM or the non-volatile memory 17 as the initial brightness adjustment quantity, and starts counting processing of a time counter (not shown) (step U2).

Subsequently, the processor monitors a count value of the time counter, determines whether the count value reaches a predetermined value, namely, whether a predetermined time has elapsed after updating and storing the brightness adjustment quantity in the RAM or the non-volatile memory 17 (step U3), advances to step U4 if the predetermined time has not elapsed yet, and returns to step U1 in order to clear the time counter and newly acquire the optical sensor output if the predetermined time has elapsed.

The processor checks a status signal from the key input device 18, determines whether the main power supply has been turned on (step U4), advances to step U5 if the main power supply has been turned on, and returns to step U3 otherwise. That is, calculation of the brightness adjustment quantity based on a detection value of the optical sensor 20 is repeated every predetermined time until the main power supply is turned on.

When the main power supply is turned on, the control advances to step S1 in FIG. 2B, and brightness adjustment is thereafter carried out based on the operations like those at steps S1 to S8 (step U5).

With the flowchart of FIG. 6A, since the initial brightness adjustment quantity (the initial aperture size, the initial exposure time, and the initial gain) is automatically set, a user can be removed of the burden of manual setting. Since brightness adjustment is carried out with the power supply being in the on state based on the automatically set initial brightness adjustment quantity, namely, the initial brightness adjustment quantity set in accordance with an optical sensor detection value immediately before turning on the main power supply, the frequency of obtaining an image with an inappropriate brightness immediately after turning on the power supply is reduced, and it is possible to approximate adequate brightness in a short time compared with the prior art.

Although an output from the optical sensor 20 is detected at step U1 and the brightness adjustment quantity according to the detection value is set at step U2 in description of the flowchart of FIG. 6A, the CCD 11 may be configured to be cyclically turned on/off at step U1 without providing the optical sensor 20, and the brightness adjustment quantity according to the brightness of the image signal obtained in the signal processor 13 may be set at step U2.

Although the brightness adjustment quantity according to the detection value is calculated and stored in the RAM or the non-volatile memory 17 at step U2 in description of the flowchart of FIG. 6A, a detection value of the optical sensor 20 may be stored in the RAM or the non-volatile memory 17 as it is, and the initial brightness adjustment quantity may be calculated based on the detection value stored when turning on the main power supply so as to execute the initial brightness adjustment.

The initial brightness adjustment quantity is stored in the RAM or the non-volatile memory 17 in description of the flowchart of FIG. 6A, but the aperture size, the exposure time, and the gain according to the detection value of the optical sensor 20 may be stored in the RAM or the non-volatile memory 17.

Although the initial brightness adjustment quantity used to determine three values of the initial aperture size, the initial exposure time, and the initial gain is automatically determined and stored in the RAM or the non-volatile memory 17 in description of the flowchart of FIG. 6A, only one or two of these three values may be automatically determined and the automatically determined values may be stored in the RAM or the non-volatile memory 17, or any one of the three values may be set as a fixed value and the initial brightness adjustment quantity used to determine the remaining two values may be automatically determined and stored in the RAM or the non-volatile memory 17.

The processing at steps U1 to U3 is repeatedly executed while the main power supply is off, the image pickup mode is set when the main power supply is on and the processing of the flowchart shown in FIG. 2B is initiated in description of the flowchart shown in FIG. 6A, but the processing at steps U1 to U3 may be repeatedly executed while a processing mode other than the image pickup mode (reproduction mode and the like) is set with the main power supply being on, and the processing of the flowchart shown in FIG. 2B may be started when the image pickup mode is selected by the operation of the mode key by a user. Furthermore, the processing at steps U1 to U3 may be repeatedly executed while the moving image pickup (moving image recording) processing is not executed with the main power supply being in the on state, and the processing of the flowchart shown in FIG. 2B may be initiated when start of the moving image pickup is instructed by the operation of the shutter key by the user.

### Automatic Setting of Initial Brightness Adjustment Quantity Using Last Memory

In FIG. 6B, when a user operates the power supply on/off key of the digital camera 10 in order to turn off the main power supply with the processing at steps S3 to S8 shown in FIG. 2B being repeatedly executed, the processor stores in the non-volatile memory 17 the brightness adjustment quantity stored in the RAM immediately before turning off the main power supply, namely, the brightness adjustment quantity of the through image displayed immediately before turning off the main power supply as the initial brightness adjustment quantity (step V1).

The processor checks a status signal from the key input device 18, determines whether the main power supply has been turned on, and advances to step V3 if the main power supply has been turned on (step V2).

When the main power supply has been turned on, namely, when display of the through image is started, the initial brightness adjustment quantity stored in the non-volatile memory 17 at step V1 is used to carry out the brightness adjustment by the operations like those at steps S1 to S8 shown in FIG. 2B (step V3).

As described above, with the structure shown in FIG. 6B, a user can be removed of the burden of manual setting like the example of FIG. 6A. Since the brightness adjustment quantity immediately before turning off the main power supply is stored in the non-volatile memory 17 as the initial brightness adjustment quantity, the time required to obtain the brightness can be shortened with respect to the second or subsequent turn-on of the main power supply when an image pickup time or an image pickup location is not very far, for example, when an image pickup is carried out while looking for an image pickup target in the field or indoors, namely, when an image pickup is carried out while the power supply is turned on/off many times in a short time.

A switch capable of alternatively selecting automatic setting of the initial brightness adjustment quantity based on the optical sensor output (FIG. 6A) and automatic setting of the initial brightness adjustment quantity based on the last memory (FIG. 6B) may be provided on the digital camera 30 so that a user can select a desired automatic setting method. By configuring in this way, the user can select an automatic setting method according to his/her image pickup style, image pickup location, or image pickup time.

Although the brightness adjustment quantity immediately before turning off the main power supply is stored in the non-volatile memory 17 in description of the flowchart shown in FIG. 6B, a brightness value of the image signal obtained immediately before turning off the main power supply may be stored, and the brightness adjustment quantity based on the brightness value may be calculated in order to execute the brightness adjustment when turning on the main power supply.

The brightness adjustment quantity immediately before turning off the main power supply is stored, the image pickup mode is set when the main power supply is turned on, and the processing of the flowchart shown in FIG. 2B is started based on the stored brightness adjustment quantity in description of the flowchart shown in FIG. 6B. However, when another processing mode is selected by the operation of the mode key by the user with the image pickup mode being set, the brightness adjustment quantity immediately before switching the mode may be stored, and the processing of the flowchart shown in FIG. 2B may be started based on the stored brightness adjustment quantity when the image pickup mode is again selected by the operation of the mode key by the user. Moreover, the brightness adjustment quantity immediately before completion of the moving image pickup (moving image recording) processing may be stored, and the processing of the flowchart shown in FIG. 2B may be started based on the stored brightness adjustment quantity when start of the moving image pickup is again instructed by the operation of the shutter key by the user.

Although the initial brightness adjustment quantity is set based on the optical sensor output immediately before turning on the power supply or the brightness adjustment quantity immediately before turning off the power supply in the second embodiment, the initial brightness adjustment quantity can be automatically set based on image pickup environment information. Description will now be given as to the automatic setting unit for the initial brightness adjustment quantity based on the image pickup environment information.

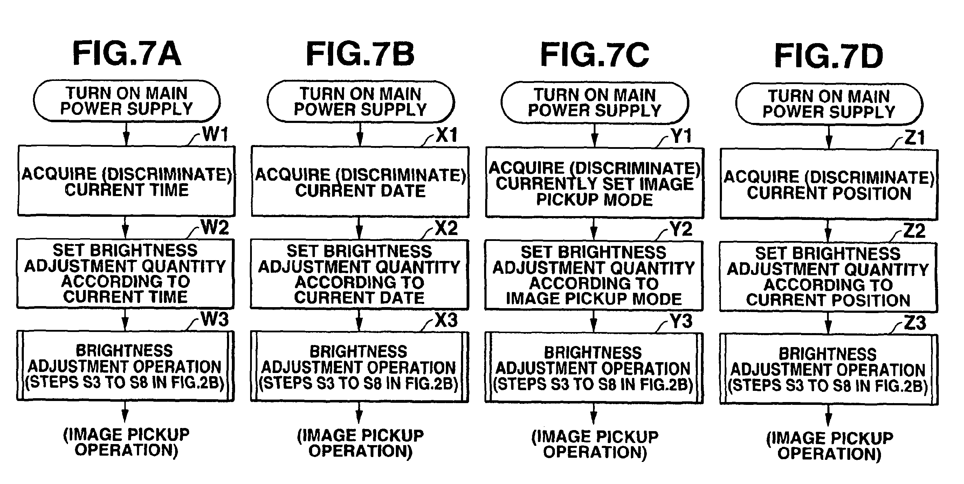

FIGS. 7A to 7D are flowcharts showing an embodiment of the initial brightness adjustment quantity setting operation by the automatic setting unit. FIG. 7A shows an example that the initial brightness adjustment quantity is automatically set based on a time, FIG. 7B shows an example that the initial brightness adjustment quantity is automatically set based on a date, FIG. 7C shows an example that the initial brightness adjustment quantity is automatically set based on a type of the image pickup mode, and FIG. 7D shows an example that the initial brightness adjustment quantity is automatically set based on an image pickup position (image pickup location).

### Automatic Setting of Initial Brightness Adjustment Quantity Based on Time

In this example, the clock 21 provided in the digital camera 30 is used. The non-volatile memory 17 or a program storing memory or the like in the controller 14 stores therein a time-brightness adjustment quantity correspondence table (not shown) in which time information is associated with the brightness adjustment quantity.

In FIG. 7A, when a user turns on the main power supply, the processor acquires current time information from the clock 21 (step W1), and sets the brightness adjustment quantity according to the current time from the time-brightness adjustment quantity correspondence table as the initial brightness adjustment quantity. That is, after converting the initial brightness adjustment quantity into the initial aperture size, the initial exposure time and the initial gain by making reference to the correspondence table stored in the non-volatile memory 17, the aperture size of the aperture device 111 is set as the initial aperture size, the initial exposure time is supplied to the TG 15, and the gain of the AGC amplifier 113 is set as the initial gain. For example, the initial brightness adjustment quantity to lower the brightness of the image signal is set in the daytime, and the initial brightness adjustment quantity to increase the brightness of the image signal is set in the nighttime (step W2). Then, the brightness adjustment is carried out with the brightness adjustment quantity set at step W2 by the operations like those at steps S3 to S8 (step W3). The time zone such as the daytime and the nighttime may be discriminated based on the time acquired at step W1.

### Automatic Setting of Initial Brightness Adjustment Quantity Based on Date

In this example, the clock 21 with a calendar function provided in the digital camera 30 is used. The non-volatile memory 17 or a program storing memory or the like in the controller 14 stores therein a date-brightness adjustment quantity correspondence table (not shown) in which date information is associated with the brightness adjustment quantity.

In FIG. 7B, when a user turns on the main power supply, the processor acquires current date information from the clock 21 (step X1), and sets the brightness adjustment quantity according to the date information from the date-brightness adjustment quantity correspondence table as the initial brightness adjustment quantity. For example, the initial brightness adjustment quantity to lower the brightness of the image signal is set in summer, and the initial brightness adjustment quantity to increase the brightness of the image signal is set in winter (step X2). Subsequently, the initial brightness adjustment quantity set at step X2 is used to execute the brightness adjustment by the operations like those at step S3 to S8 shown in FIG. 2B (step X3).

The season, i.e., spring, summer, autumn and winter may be discriminated based on the date acquired at step X1.

The time-brightness adjustment quantity correspondence table for each date in which the time information is associated with the brightness adjustment quantity in accordance with each date information may be stored in the non-volatile memory 17 or the program storing memory or the like in the controller 12 so that the current date and time information can be acquired and the corresponding brightness adjustment quantity can be obtained, thereby setting the initial brightness adjustment quantity.

### Automatic Setting of Initial Brightness Adjustment Quantity Based on Image Pickup Mode Type

In FIG. 7C, when a user turns on the main power supply, the processor checks a setting state of the image pickup mode based on the mode key operation, acquires and judges a currently set image pickup mode type (step Y1), and sets the brightness adjustment quantity according to the image pickup mode type as the initial brightness adjustment quantity. For example, the initial brightness adjustment quantity to increase the brightness of the image signal is set if the set image pickup mode is a night image pickup mode, and the initial brightness adjustment quantity to lower the brightness of the image signal is set in the case of any other image pickup mode (step Y2). Then, the brightness adjustment is executed with the initial brightness adjustment quantity set at step Y2 by the operations like those at steps S3 to S8 in FIG. 2B (step Y3).

At step Y2, it is possible to set the initial brightness adjustment quantity according to the image pickup mode such as a regular image pickup mode, a close-up mode, a panoramic image pickup mode and others as well as the night image pickup mode. When the image pickup mode is switched and selected by using an electronic switch in place of a mechanical switch, information of the image pickup mode set immediately before turning off the main power supply is stored in the non-volatile memory 17, and the currently set image pickup mode type is acquired by reading this information at the time of turning on the main power supply.

### Automatic Setting of Initial Brightness Adjustment Quantity Based on Image Pickup Position

In this example, the GPS unit 22 provided in the digital camera 30 is used. The non-volatile memory 17 or the program storing memory or the like in the controller 14 stores therein a position-brightness adjustment quantity correspondence table (not shown) in which a location (position) is associated with the brightness adjustment quantity.

In FIG. 7D, when a user turns on the main power supply, the processor acquires and judges current position information from the GPS unit 22 (step Z1), fetches the brightness adjustment quantity according to the current position from the position-brightness adjustment quantity table, and sets it as the initial adjustment quantity. For example, the initial brightness adjustment quantity to lower the brightness of the image signal is set out of doors, and the initial brightness adjustment quantity to increase the brightness of the image signal is set indoors (step Z2). Then, the brightness adjustment is executed with the initial brightness adjustment quantity set at step Z2 by the operations like those at steps S3 to S8 (step Z3).

As apparent from the explanation of the flowcharts of FIGS. 7A to 7D, since the initial brightness adjustment quantity can be automatically set in accordance with the image pickup environment at the time of turning on the power supply, a user can be removed of the burden of manual setting. The brightness adjustment at the time of turning on the power supply is carried out with the automatically set initial brightness adjustment quantity, and hence the advantages like those in the second embodiment can be obtained.

Although three values of the initial aperture size, the initial exposure time, and the initial gain are automatically set based on the acquired image pickup environment information in the description of the flowcharts shown in FIGS. 7A to 7D, only one or two values of these three values may be automatically set.

In the description of the flowcharts shown in FIGS. 7A to 7D, when the main power supply is turned on, the image pickup environment information is acquired, and the initial brightness adjustment quantity is automatically set based on this image pickup environment information. However, when a user operates the mode key in order to select a processing mode other than the image pickup mode (reproduction mode or the like) being set, the image pickup environment information may be acquired, and the initial brightness adjustment quantity may be automatically set based on this image pickup environment information. In addition, when a user operates the shutter key in order to instruct start of the moving image pickup with the main power supply being in the on state, the image pickup environment information may be obtained, and the initial brightness adjustment quantity may be automatically set based on this image pickup environment information.

Although the above has described the embodiments according to the present invention, the present invention is not limited to the foregoing embodiments, and it is needless to say that various modifications can be carried out.

## Claims

1. An imaging apparatus comprising:
imaging means (11) for cyclically picking-up an image of an object and cyclically outputting an image signal of the object, the imaging means comprising means for adjusting a brightness of the image signal;
means (14) for detecting the brightness of the image signal cyclically output from the imaging means;
controlling means (14) for changing, on the cyclically picking-up a brightness adjusting quantity of the brightness adjusting means based on the brightness detected by the detecting means;
first instructing means (18) for instructing the imaging means to end the cyclic picking-up; and
second instructing means (18) for instructing the imaging means to start the cyclic picking-up,
**characterized in that**
the controlling means (14) is, adapted to store, when the first instructing means instructs the imaging means to end the cyclic picking-up, information representative of the brightness adjusting quantity of the brightness adjusting means in a storage device, and
the controlling means is adapted to set, when the second instructing means instructs the imaging means to start the cyclically picking-up, the brightness adjusting quantity of the brightness adjusting means, which was stored in the storage device at the end of previous cyclically picking-up, as an initial brightness adjusting quantity

2. The imaging apparatus according to claim 1, **characterized in that** the first instructing means comprises means for instructing a turn-off of a power supply of the imaging apparatus, and
the second instructing means comprises means for instructing a turn-on of the power supply of the imaging apparatus.

3. The image apparatus according to claim 1 or 2, wherein the image means (11) comprises an image pickup device (112); and
the controlling means changes an exposure time of the image pick-up device based on the brightness detected by the detecting means.

4. The imaging apparatus according to claim 1 or 2, wherein
the imaging means (11) comprises an image pick-up device (112) and an aperture device (111) for adjusting an amount of light incident to the image pick-up device; and
the controlling means changes an aperture size of the aperture device based on the brightness detected by the detecting means.

5. The imaging apparatus according to claim 1 or 2, wherein
the imaging means (11) comprises an image pick-up device (112) and an amplifier (113) configured to amplify an output signal of the image pick-up device; and
the controlling means changes a gain of the amplifier based on the brightness detected by the detecting means.

6. An imaging method for an imaging device including imaging means which is cyclically picking up an image of an object and cyclically outputting an image signal of the object, the imaging means comprising means for adjusting a brightness of the image signal, the method comprising the steps of:
detecting the brightness of the image signal cyclically output from the imaging means;
changing, on the cyclic picking-up, a brightness adjusting quantity of the brightness adjusting means based on the brightness detected in the detecting step;
instructing the imaging means to end the cyclic picking-up ; and
instructing the imaging means to start the cyclic picking-up;
**characterized by**
storing, when the imaging means is instructed to end the cyclic picking-up, the brightness adjusting quantity of the brightness adjusting means in a storage device, and
setting, when the imaging means is instructed to start the cyclically picking-up, the brightness adjusting quantity which was stored at the stop of previous cyclically picking-up, as an initial brightness adjusting quantity.

## Patentansprüche

1. Bilderzeugungsvorrichtung, die umfasst:
eine Bilderzeugungseinrichtung (11) zum zyklischen Aufnehmen eines Bildes eines Objektes sowie zum zyklischen Ausgeben eines Bildsignals des Objektes, wobei die Bilderzeugungseinrichtung eine Einrichtung zum Anpassen einer Helligkeit des Bildsignals umfasst;
eine Einrichtung (14) zum Erfassen der Helligkeit des von der Bilderzeugungseinrichtung zyklisch ausgegebenen Bildsignals;
eine Steuereinrichtung (14) zum Ändern eines Helligkeitsanpassungs-Maßes der Helligkeitsanpassungs-Einrichtung bei dem zyklischen Aufnehmen auf Basis der durch die Erfassungseinrichtung erfassten Helligkeit;
eine erste Anweisungseinrichtung (18), mit der die Bilderzeugungseinrichtung angewiesen wird, das zyklische Aufnehmen zu beenden; und
eine zweite Anweisungseinrichtung (18), mit der die Bilderzeugungseinrichtung angewiesen wird, das zyklische Aufnehmen zu beginnen,
**dadurch gekennzeichnet, dass**
die Steuereinrichtung (14) so eingerichtet ist, dass sie, wenn die erste Anweisungseinrichtung die Bilderzeugungseinrichtung anweist, das zyklische Aufnehmen zu beenden, Informationen, die repräsentativ für das Helligkeitsanpassungs-Maß der Helligkeitsanpassungs-Einrichtung sind, in einer Speichereinrichtung speichert, und
die Steuereinrichtung so eingerichtet ist, dass sie, wenn die zweite Anweisungseinrichtung die Bilderzeugungseinrichtung anweist, das zyklische Aufnehmen zu beginnen, das Helligkeitsanpassungs-Maß der Helligkeitsanpassungs-Einrichtung, das in der Speichereinrichtung am Ende des vorhergehenden zyklischen Aufnehmens gespeichert wurde, als ein Anfangs-Helligkeitsanpassungs-Maß einstellt.

2. Bilderzeugungsvorrichtung nach Anspruch 1, **dadurch gekennzeichnet, dass** die erste Anweisungseinrichtung eine Einrichtung zum Anweisen eines Abschaltens einer Stromversorgung der Bilderzeugungsvorrichtung umfasst und
die zweite Anweisungseinrichtung eine Einrichtung zum Anweisen eines Anschaltens der Stromversorgung der Bilderzeugungsvorrichtung umfasst.

3. Bilderzeugungsvorrichtung nach Anspruch 1 oder 2, wobei die Bilderzeugungseinrichtung (11) eine Bildaufnahmeeinrichtung (112) umfasst; und
die Steuereinrichtung eine Belichtungszeit der Bildaufnahmeeinrichtung auf Basis der durch die Erfassungseinrichtung erfassten Helligkeit ändert.

4. Bilderzeugungsvorrichtung nach Anspruch 1 oder 2, wobei
die Bilderzeugungseinrichtung (11) eine Bildaufnahmeeinrichtung (112) und eine Blendeneinrichtung (111) umfasst, mit der eine auf die Bilderzeugungseinrichtung auftreffende Lichtmenge angepasst wird; und
die Steuereinrichtung eine Blendengröße der Blendeneinrichtung auf Basis der durch die Erfassungseinrichtung erfassten Helligkeit ändert.

5. Bilderzeugungsvorrichtung nach Anspruch 1 oder 2, wobei
die Bilderzeugungseinrichtung (11) eine Bildaufnahmeeinrichtung (112) und eine Verstärkungseinrichtung (113) umfasst, die so konfiguriert ist, dass sie ein Ausgangssignal der Bildaufnahmeeinrichtung verstärkt; und
die Steuereinrichtung einen Verstärkungsfaktor der Verstärkungseinrichtung auf Basis der durch die Erfassungseinrichtung erfassten Helligkeit ändert.

6. Bilderzeugungsverfahren für eine Bilderzeugungseinrichtung, die zyklisch ein Bild eines Objektes aufnimmt und zyklisch ein Bildsignal des Objektes ausgibt, wobei die Bilderzeugungseinrichtung eine Einrichtung zum Anpassen einer Helligkeit des Bildsignals umfasst und das Verfahren die folgenden Schritte umfasst:
Erfassen der Helligkeit des zyklisch von der Bilderzeugungseinrichtung ausgegebenen Bildsignals;
Ändern eines Helligkeitsanpassungs-Maßes der Helligkeitsanpassungseinrichtung bei dem zyklischen Aufnehmen auf Basis der in dem Erfassungsschritt erfassten Helligkeit;
Anweisen der Bilderzeugungseinrichtung, das zyklische Aufnehmen zu beenden; und
Anweisen der Bilderzeugungseinrichtung, das zyklische Aufnehmen zu beginnen;
**gekennzeichnet durch**
Speichern des Helligkeitsanpassungs-Maßes der Helligkeitsanpassungs-Einrichtung in einer Speichereinrichtung, wenn die Bilderzeugungseinrichtung angewiesen wird, das zyklische Aufnehmen zu beenden, und
Einstellen des Helligkeitsanpassungs-Maßes, das beim Beenden des vorhergehenden zyklischen Aufnehmens gespeichert wurde, als ein Anfangs-Helligkeitsanpassungs-Maß,
wenn die Bilderzeugungseinrichtung angewiesen wird, das zyklische Aufnehmen zu beginnen.

## Revendications

1. Appareil d'imagerie comportant :
un moyen de formation d'images (11) pour enregistrer cycliquement une image d'un objet et délivrer cycliquement un signal d'image de l'objet, le moyen de formation d'images comportant un moyen pour régler la luminosité du signal d'image ;
un moyen (14) pour détecter la luminosité du signal d'image délivré cycliquement depuis le moyen de formation d'images ;
un moyen de contrôle (14) pour modifier, lors de l'enregistrement cyclique, une quantité de réglage de luminosité du moyen de réglage de luminosité en fonction de la luminosité détectée par le moyen de détection ;
un premier moyen destiné à délivrer des instructions (18) pour ordonner au moyen de formation d'images de mettre fin à l'enregistrement cyclique ; et
un second moyen destiné à délivrer des instructions (18) pour ordonner au moyen de formation d'images de démarrer l'enregistrement cyclique,
**caractérisé en ce que**
le moyen de contrôle (14) est adapté pour mémoriser, lorsque le premier moyen destiné à délivrer des instructions ordonne au moyen de formation d'images de mettre fin à l'enregistrement cyclique, une information représentative de la quantité de réglage de luminosité du moyen de réglage de luminosité dans un dispositif de stockage, et
le moyen de contrôle est adapté pour déterminer, lorsque le second moyen destiné à délivrer des instructions ordonne au moyen de formation d'images de commencer l'enregistrement cyclique, la quantité de réglage de luminosité du moyen de réglage de luminosité, qui a été stockée dans le dispositif de stockage à la fin de l'enregistrement cyclique précédent, en tant que quantité de réglage de luminosité initiale.

2. Appareil de formation d'images selon la revendication 1, **caractérisé en ce que** le premier moyen destiné à délivrer des instructions comporte un moyen pour ordonner une coupure de l'alimentation de l'appareil de formation d'images, et
le second moyen destiné à délivrer des instructions comporte un moyen pour ordonner une mise en marche de l'alimentation de l'appareil de formation d'images.

3. Appareil de formation d'images selon la revendication 1 ou 2, dans lequel le moyen de formation d'images (11) comporte un dispositif d'enregistrement d'images (112) ; et
le moyen de contrôle modifie un temps d'exposition du dispositif d'enregistrement d'images en fonction de la luminosité détectée par le moyen de détection.

4. Appareil de formation d'images selon la revendication 1 ou 2, dans lequel
le moyen de formation d'images (11) comporte un dispositif d'enregistrement d'images (112) et un dispositif d'ouverture (111) pour régler une quantité de lumière arrivant sur le dispositif d'enregistrement d'images ; et
le moyen de contrôle modifie une taille d'ouverture du dispositif d'ouverture en fonction de la luminosité détectée par le moyen de détection.

5. Appareil de formation d'images selon la revendication 1 ou 2, dans lequel
le moyen de formation d'images (11) comporte un dispositif d'enregistrement d'images (112) et un amplificateur (113) configuré pour amplifier un signal de sortie du dispositif d'enregistrement d'images ; et
le moyen de contrôle modifie un gain de l'amplificateur en fonction de la luminosité détectée par le moyen de détection.

6. Procédé de formation d'images pour un dispositif de formation d'images comportant un moyen de formation d'images qui enregistre cycliquement une image d'un objet et délivre cycliquement un signal d'image de l'objet, le moyen de formation d'images comportant un moyen pour régler une luminosité du signal d'image, le procédé comportant les étapes consistant à :
détecter la luminosité du signal d'image délivré cycliquement par le moyen de formation d'images ;
modifier, lors de l'enregistrement cyclique, une quantité de réglage de luminosité du moyen de réglage de luminosité en fonction de la luminosité détectée au cours de l'étape de détection ;
ordonner au moyen de formation d'images de mettre fin à l'enregistrement cyclique ; et
ordonner au moyen de formation d'images de démarrer l'enregistrement cyclique ;
**caractérisé par**
la mémorisation, lorsqu'il est ordonné au moyen de formation d'images de mettre fin à l'enregistrement cyclique, de la quantité de réglage de luminosité du moyen de réglage de luminosité dans un dispositif de stockage, et
la détermination, lorsque qu'il est ordonné au moyen de formation d'images de démarrer l'enregistrement cyclique, de la quantité de réglage de luminosité qui a été stockée à l'arrêt de l'enregistrement cyclique précédent, en tant que quantité de réglage de luminosité initiale.
